# EUROPEAN PATENT APPLICATION

(11) **EP 3 657 394 A1**
(43) Date of publication of application: **27.05.2020**
(21) Application number: 18207603.4
(22) Date of filing: 21.11.2018
(51) Int. Cl.: G06K 9/62

(54) **PROCESSING IMAGE DATA FOR TRAINING AN IMAGE PROCESSING SYSTEM**

(71) Applicant: Siemens Healthcare GmbH, 91052 Erlangen (DE)
(72) Inventor: Ionasec, Razvan, 90402 Nuernberg (DE); Grbic, Sasa, Plainsboro, 08536 (US); Sperl, Jonathan, 96047 Bamberg (DE)

(57) **Abstract**

The invention relates to a method of processing image data for training an image processing system, the method comprising:
receiving image data representing an image;
processing the image data to determine one or metrics relating to one or more characteristics of the image; and
performing a determination process to determine, based on the one or more metrics, whether to store the image data in a training data repository.

## Description

The invention relates to methods, apparatus and computer program products for processing image data for training an image processing system.

Artificial Intelligence (AI) systems, comprising neuronal networks, are increasingly being used to process medical images and to aid in radiological decision making. To train such algorithms, a large set of training data, with corresponding ground truth data, is required.

Conventionally, training data is obtained by manually processing historical medical image data, which requires a skilled operator (such as a trained radiologist or radiographer) to review the medical image, provide input regarding ground truth features, perform other processes to protect patient anonymity, and then store the data in a training data repository. Such a method of processing image data for use in training the neuronal networks, is resource intensive and therefore can be expensive and time consuming.

Furthermore, to be effective, a training data set needs to be comprehensive, covering a wide range of medical pathologies and anatomical differences. Accordingly, much of the training data for such AI systems is obtained from retrospective cohorts of studies, which again requires manual selection of appropriate cases, and skilled association of ground truth data. Such sets of training data are either fixed or take a significant amount of time and resources to be updated; they are therefore limited in their ability to train AI systems to process medical images of patients presenting with unusual pathologies or anatomies and/or to adapt to new image processing tasks.

These problems are solved or mitigated by the method of claim 1, by the data processing system of claim 9, and by the computer program product of claim 15. The dependent claims are related to further aspects of the invention.

The invention relates in one aspect to a method of processing image data for training an image processing system, the method comprising:
receiving image data representing an image;
processing the image data to determine one or metrics relating to one or more characteristics of the image; and
performing a determination process to determine, based on the one or more metrics, whether to store the image data in a training data repository.

One embodiment of the invention relates in one aspect to a method comprising storing the image data in the training data repository on the basis that the determination process determines that the image data is to be stored.

One embodiment of the invention relates in one aspect to a method comprising:
retrieving image data from the training data repository;
associating ground truth data with the retrieved image data; and
training the image processing system on the basis of the retrieved image data and associated ground truth data.

One embodiment of the invention relates in one aspect to a method comprising annotating the image data to provide an indication that the image data is suitable for training the image processing system.

One embodiment of the invention relates in one aspect to a method wherein the determination process comprises comparing the one or more metrics with one or more threshold values.

One embodiment of the invention relates in one aspect to a method wherein the one or more metrics comprises one or more of: a determined size metric of an imaged feature; a determined volume metric of an imaged feature; one or more determined intensity values associated with an imaged feature; and one or more texture metrics associated with an imaged feature.

One embodiment of the invention relates in one aspect to a method comprising determining a confidence level associated with an output of an image processing algorithm and performing the determination process at least partly on the basis of the determined confidence level.

One embodiment of the invention relates in one aspect to a method wherein the data processing system is arranged to receive an indication of a category of image data which is desired for training the image processing system, and the data processing system is arranged to perform the determination process at least partly on the basis of the received indication.

The invention relates in one aspect to a data processing system for training an image processing system, the data processing system comprising a processor arranged to:
receive image data representing an image;
process the image data to determine one or metrics relating to one or more characteristics of the image; and
perform a determination process to determine, based on the one or more metrics, whether to store the image data in a training data repository.

One embodiment of the invention relates in one aspect to a data processing system arranged to store the image data in the training data repository at least partly on the basis of the determination that the image data represents an imaging case suitable for training of the image processing system

One embodiment of the invention relates in one aspect to a data processing system comprising a first user interface, the first user interface being arranged to receive user input representing an indication of whether the determination that the image data represents an imaging case suitable for training of the image processing system is correct, wherein the data processing system is arranged to store the image data in the training data repository on the basis of the received user input.

One embodiment of the invention relates in one aspect to a data processing system wherein the first user interface comprises a touch-screen display, and wherein the processor is arranged to distinguish between a first touch-screen user input confirming that the image data represents an imaging case suitable for training the image processing system and a second touch-screen user input indicating that the image data does not represent an imaging case suitable for training the image processing system.

One embodiment of the invention relates in one aspect to a data processing system wherein the first and second touch-screen user inputs comprise swipe gestures, wherein the first touch-screen user input comprises a swipe gesture in a first direction and the second touch-screen user input comprises a swipe gesture in a second direction, the second direction being substantially opposite to the first direction.

One embodiment of the invention relates in one aspect to a data processing system comprising a second user interface, the second user interface being arranged to receive user input to associate ground truth data with the stored mage data wherein the data processing system is arranged to retrieve image data from the training data repository and to train the image processing system on the basis of the retrieved image data and associated ground truth data.

The invention relates in one aspect to a computer program, the computer program being loadable into a memory unit of a data processing system, including program code sections to make a data processing system execute the method according to an aspect of the invention when the computer program is executed in said data processing system.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The image processing may be performed on any image data but in certain examples may be performed on medical image data representing a medical image. For example, the image may be acquired by a medical imaging device selected from the group consisting of an X-ray fluoroscopy device, a computed tomography device, a magnetic resonance imaging device, a molecular imaging device, a SPECT-device, a PET-device and combinations thereof. The medical imaging device can be, for example, a combination of an imaging modality and a therapy modality, in particular a radiation therapy modality.

Reference is made to the fact that the described methods and the described image processing apparatus are merely preferred example embodiments of the invention and that the invention can be varied by a person skilled in the art, without departing from the scope of the invention provided it is specified by the claims.

The invention will be illustrated below with reference to the accompanying figures using example embodiments. The illustration in the figures is schematic and highly simplified and not necessarily to scale.
- Fig. 1: is a schematic diagram of a data processing system according to one aspect of the invention;
- Fig. 2: is a simplified workflow diagram illustrating a method of processing image data for training an image processing system, according to one aspect of the invention; and
- Fig. 3: is a schematic diagram of a data processing system according to one aspect of the invention.

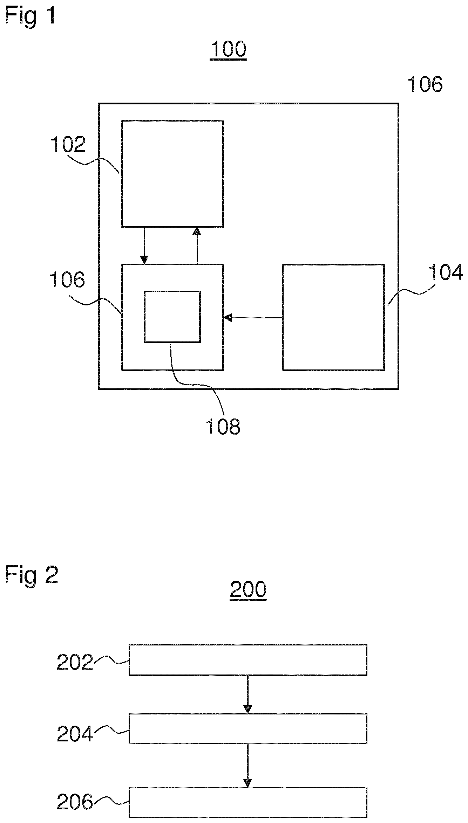

Fig. 1 is a diagram illustrating a data processing system 100 according to an embodiment of the present invention. The data processing system 100 comprises a processor 102 configured to process image data for training an image processing system, according to the methods described herein. The data processing system 100 may, for example, operate on a computing device, such as a workstation, desktop computer or laptop computer, or may operate on server, or may operate in a cloud environment.

The image processing system may execute one or more image processing algorithms, each of which is configured to perform an image processing process on an image to generate a respective output. In particular, the image processing system 100 may be trained to identify image data representing images that are suitable or useful for training an image processing system.

The data processing system 100 also comprises a communications interface 104 for receiving data, and a memory 106 for storing received data.

The data received at the communications interface 104 may include image data, data indicative of one or more image processing algorithms according to which the image data has been processed, and/or data indicating a category of image data which is desired for training the image processing system.

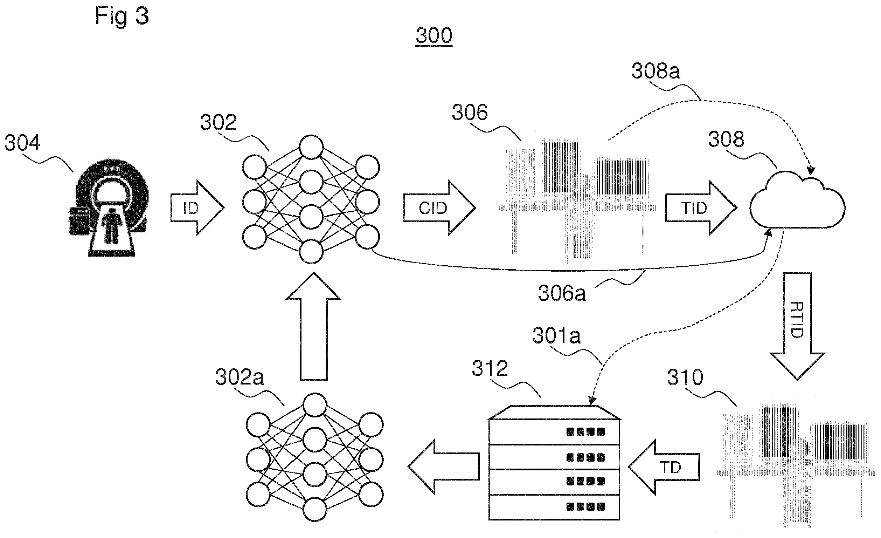

The communications interface 104 may also be used by the data processing system 100 to transfer image data that is to be stored in a training data repository. For example, image data that is deemed, by the data processing system 100, to be suitable for training the image processing system may be transmitted via the communications interface 104 to be stored in a training data repository, as described below with reference to Figure 3.

The memory 106 may be arranged to store data in the form of a trained model 108 that may be trained prior to installation and use of the data processing system 100 in an operation setting.

The model 108 may be trained using a training set of examples to the process for determining the process sequence. In some examples, the model 108 is arranged firstly to perform an image processing function with respect to a received image. For example, the model 108 may be arranged to identify anatomical features within the image, to determine one or more size metrics (i.e. measurements of length) of features identified within the image, to determine one or more volume metrics of features identified in the image, to determine one or more intensity values associated with features identified in the image, and/or to determine one or more texture metric associated with features identified within the image.

The memory 106 may also store a computer program executable by the processor 102, to perform the methods described herein, for example the method described below with reference to Figure 2.

The memory 106, may be any suitable form of memory. For example, the memory 106 may comprise volatile memory, such as random-access memory (RAM) and/or non-volatile memory such as read only memory (ROM) or flash memory. Furthermore, the memory 106 might comprise multiple, separate, memory devices and may comprise a combination of volatile and non-volatile memory. In some examples, certain components of the invention, such as the computer program and/or the model, may be stored in one memory device, while other components may be stored in another memory device. In other examples, the memory may be an associative memory.

In some embodiments, the processor 102 may also be configured to perform image processing functions to process the image (i.e. to apply the image processing algorithms mentioned above). The image processing may be performed on any image but in certain examples may be performed on a medical image. For example, the image may be acquired by a medical imaging device selected from the group consisting of an X-ray fluoroscopy device, a computed tomography device, a magnetic resonance imaging device, a molecular imaging device, a SPECT-device, a PET-device and combinations thereof. The medical imaging device can be, for example, a combination of an imaging modality and a therapy modality, for example a radiation therapy modality. In some embodiments, the image may be retrieved from a picture archiving and communication system (PACS); for example, the image may be routed to the data processing system 100 using Digital Imaging and Communications in Medicine (DICOM) auto-routing. In some embodiments, the data processing system 100 may be part of an image acquisition system, such as a medical imaging device of the types described above. Alternatively, the data processing system 100 may be separate from the imaging device used to acquire an image and may be retrieved by the data processing system 100 or sent to the data processing system 100 via the communications interface 104.

Figure 2 is a flow diagram depicting a method 200 of processing image data for training an image processing system. For example, the method 200 may be implemented by the data processing system 100 described above with reference to Figure 1.

At block 202, image data representing an image is received. For example, as described above, the image data may be medical image data generated by, and received from, a medical imaging device such as an X-ray fluoroscopy device, a computed tomography device, a magnetic resonance imaging device, a molecular imaging device, a SPECT-device, a PET-device and combinations thereof.

At block 204, the image data is processed to determine one or more metrics relating to one or more characteristics of the image. For example, as described above, the one or more metrics may relate to or include one or more of: a determined size metric of an imaged feature; a determined volume metric of an imaged feature; one or more determined intensity values associated with an imaged feature; and one or more texture metrics associated with an imaged feature.

At block 206, a determination process is performed to determine, based on the one or more metrics, whether to store the image data in a training data repository.

The determination process may be arranged, for example, to determine that the one or more metrics falls outside of normal parameters and thus represents an unusual case. For example, the determination process may compare the one or more metrics with one or more corresponding threshold values and may determine that the one or more metrics is above or below the predetermined threshold value or is outside a predetermined range of values. This may indicate that the image processing algorithm used to determine the one or more metrics has returned an incorrect result or may indicate that that the imaging data relates to an image of an anatomy or pathology that is clinically interesting. For example, the determination process may determine that the one or metrics represents an outlier result not adequately covered by cases already used to train the image processing system, or not commonly found in the general population, and which may therefore be useful for training the image processing system (i.e. because there are limited examples of image data with those properties). In any event, the data processing system 100 may identify that the image data represents an imaging case that is interesting and potentially suitable for training the image processing system for analyzing subsequently acquired or processed image data.

For example, an image processing algorithm may be arranged to segment image data to determine a location of an aorta and to measure a diameter of the aorta. The data processing system 100 may compare the measured diameter of the aorta with a predetermined range of normal diameters (e.g. the predetermined normal range may be defined as 20 - 30 mm) . The data processing system 100 may determine that image data that produce measures of aortic diameters outside of the predetermined range are to be stored for subsequent training of the image processing system.

In some embodiments, the one or more metrics may each be assigned a corresponding confidence value or level. The confidence values or levels may represent, for example, a degree of confidence (e.g. defined as a probability) that the one or more metrics is correct. The data processing system 100 may perform the determination process at least partly on the basis of the determined confidence value or level. For example, the data processing system 100 may determine that image data for which one or more metrics is determined with a confidence value or level below a predefined confidence threshold should be stored in the training data repository.

In some embodiments, the data processing system 100 may determine that that image data should be stored if the image processing algorithm fails to return a requested metric or if a returned metric is determined to be incorrect. In other embodiments, the data processing system 100 may determine that a returned metric is incorrect if the format in which it is returned is determined to be in a different format to an expected data format; for example, the data processing system 100 may determine that a returned metric is incorrect if the resolution of the image data does not correspond with a predefined resolution, or if the reconstruction kernel used to reconstruct an image is not a specified reconstruction kernel (e.g. if the reconstruction kernel is not fully supported by the data processing system 100).

In another example, the data processing system 100 may determine that a returned metric is incorrect if the image processing algorithm determines that anatomical features identified within the image data do not correspond with anatomical features expected to be present in the image data. For example, if the image processing algorithm is arranged to determine one or metrics relating to image features normally present in an image of a head, and the image processing algorithm determines that anatomical features present in the image relate to another part of the anatomy (e.g. features of a limb), the data processing system 100 may determine that the image data should be stored.

In some embodiments, based on the determination process determining that the image data is to be stored, the image data may be stored in a training data repository. For example, the image data may be stored locally, at least temporarily, in the memory 106. In other embodiments, the image data may, additionally or alternatively, be stored in a remote storage location, such as a remote server or in a cloud storage service.

Figure 3 is a schematic diagram of a learning system 300 illustrating the operation of a data processing system, such as the data processing system 100 described above with reference to Figure 1, and the interaction of the data processing system 100 with other elements to provide a system in which image data can be stored for subsequent training of the data processing system 100.

The learning system 300 comprises a data processor 302, which may perform the functions performed by the data processing system 100 described above with reference to Figure 1. Additionally, the data processor 302 may be arranged to receive image data, ID, from a data generator 304, which may, for example, comprise any one of the medical imaging devices described above, or a combination thereof. For example, the data generator may comprise one or more of: an X-ray fluoroscopy device, a computed tomography device, a magnetic resonance imaging device, a molecular imaging device, a SPECT-device, and a PET-device.

In some embodiments, the data processor 302 may not be directly connected to a data generator 304 and may alternatively retrieve image data from a memory in which image data is stored and retrievable for analysis by the data processor 302.

In some embodiments, as shown in Figure 3, candidate image data, CID, which the determination process has determined is a candidate to be stored in a training data repository, is routed to a data annotator 306. The data annotator 306, may comprise a workstation operable to display the candidate image data ID to a trained operator (e.g. a radiologist or a radiographer), who may provide one or more annotations to the image data. The data annotator 306 may comprise a user interface, such as a keyboard or a touch-screen display, to receive user input from the operator. In some examples, the annotations may indicate an opinion as to whether the candidate image data CID is of sufficient interest and use as training data and accordingly whether the candidate image data should be stored in a training data repository 308. For example, the operator operating the data annotator 306 may determine that the candidate image data CID is anomalous, or otherwise not useful for training an image processing system, and may annotate the candidate image data accordingly; contrarily, the operator operating the data annotator 306 may determine that the candidate image data CID is useful for training an image processing system and may annotate the candidate image data accordingly.

If the candidate image data CID is annotated to indicate that it should be stored in the training data repository 308, training image data, TID, comprising the original image data ID and any annotations provided by the operator of the data annotator is stored in the training data repository 308. If the candidate image data is annotated to indicate that it should not be stored in the training data repository 308, it may be discarded by the data annotator 306 and/or not stored in the training data repository 308. In some embodiments, candidate image data that is annotated to indicate that it should not be stored in the training data repository 308 may be stored in a backend database and used to improve the algorithms used to select candidate image data CID.

In some embodiments, the training image data TID, may be further processed to remove any personal data prior to being stored in the training data repository 308. For example, where the image data ID is medical image data, the data processor 302 or the data annotator 306 may be arranged to remove any data that could be used to identify the patient that was the subject of the image acquisition, thereby anonymizing the training image data TID stored in the training data repository 308.

In some embodiments, the data annotator 306 may be omitted or bypassed and image data ID determined by the data processor 302 to be useful for training the image processing system may be stored in the training data repository 308 without further intervention (i.e. annotation) by the data annotator 306; this is indicated in Figure 3 by the arrow labelled 306a.

In some embodiments, the training image data TID may be retrieved as retrieved training image data, RTID, from the training data repository 308 by a data curator 310. Similar to the data annotator 306, the data curator 310 may comprise a workstation operable by a trained operator (e.g. a radiologist or a radiographer). The data curator 310 may comprise a user interface, such as a keyboard or a touch-screen display, to receive user input from the operator. The operator of the data curator 310 may operate the data curator 310 by providing user input via the user interface to associate ground truth data with the retrieved training image data RTID to generate training data, TD, that can be transmitted to, or otherwise received by, a processor training system 312.

However, in some embodiments, the function of associating ground truth data with training image data TID may alternatively be provided by an operator operating the data annotator 306 in a single step. In such embodiments, the data curator 310 may be omitted and the training image data TID, which in this embodiment comprises ground truth data, may be stored in the training data repository 308 (as indicated by the dashed arrow labelled 308a) and transmitted to or retrieved by the processor training system 312 directly (as indicated by the dashed arrow labelled 310a).

Similarly, in some embodiments, the function of annotating candidate image data CID described above with reference to the data annotator may be provided by the data curator 310 and the data annotator 306 may be omitted accordingly.

The processor training system 312 is arranged to retrain the data processor 302 to generate a retrained data processor 302a, which is additionally trained to using the candidate image data CID (or, alternatively, the annotated training image data TID) to improve the ability of the retrained data processor 302a to perform image processing functions with respect to the original data processor 302.

In some embodiments, the learning system 300 may be arranged indicate a category of image data that is desired for training the data processor 302. For example, the data processor 302 may be arranged to receive an indication of a category of image data which is desired for training. Such an indication may be received, for example, from the processor training system 312 via a communications interface such as the communications interface 104 described above with reference to Figure 1. In some embodiments, the indication may be received via the training data repository 308. The data processor 302 may, in response to receiving such an indication, may perform the determination process, to determine whether to store the image ID data in the training data repository 308, or transmit the training data ID as candidate image data CID to the data annotator 306, at least partly on the basis of the received indication.

The data processing system 100 described above with reference to Figure 1 and the method described above with reference to Figure 2, enable a data processor operating in a learning system such as the learning system 300 described with reference to Figure 3, to automatically, or semi-automatically, identify and flag images cases that are relevant for training of the data processor and therefore for improving the ability of image processing algorithms executed by the data processor.

Furthermore, the learning system 300 described with reference to Figure 3 enables user input and/or feedback in relation to images cases determined by the data processing system to be relevant for subsequent training. For example, by enabling a trained operator to annotate image data, the system allows the operator to rank the quality of each imaging case determined by the data processing system 100.

In some embodiments, feedback provided by an operator of the data annotator 306 and/or the data curator 310 may be a multilevel rating system; for example, the operator may provide a user input representing a grade (e.g. 1 - 5), where a lower grade represents a lower expectation that the candidate image data CID represents data that may be useful for training a data processor (and therefore should be stored in the training data repository 308). In other embodiments, the feedback provided by an operator of the data annotator 306 and/or the data curator 310 may be a binary rating system; for example, the operator may provide a user input representing either confirmation that the candidate image data should be stored in the training data repository 308 or confirming that the candidate image data should not be stored in the training data repository 308 (i.e. "like" or "dislike").

In one embodiment, the data annotator 306 may be arranged to receive user input representing an indication of whether the determination that the image data represents an imaging case suitable for training of the image processing system is correct, and to store the candidate image data CID in the training data repository 308 on the basis of the received user input. For example, the data annotator 306 may comprise a touch-screen display arranged to receive touch screen user inputs, such as gesture inputs, from an operator. The data annotator 306 may be arranged to distinguish between a first touch-screen user input confirming that the image data represents an imaging case suitable for training the image processing system and a second touch-screen user input indicating that the image data does not represent an imaging case suitable for training the image processing system. For example, the first and second touch-screen user inputs may comprise swipe gestures. The first touch-screen user input may comprise, for example, a swipe gesture in a first direction (e.g. swipe to the right) and the second touch-screen user input may comprise a swipe gesture in a second direction substantially opposite to the first direction (e.g. a swipe to the left).

In other embodiments, the first and second user inputs may be provided using other gesture inputs, such as taps on certain parts of a touch-screen display, or by other user inputs such as mouse clicks.

Enabling the operator to confirm whether or not to store image data in the training data repository using the first and second user inputs provides a simple and efficient method by which the operator can operate the data annotator 306. This may in turn, may reduce the impact of the annotation process on existing workflows conducted by the operator. Furthermore, it may reduce the number of instances where erroneous results are stored in the training data repository and/or image data which may be suitable and/or useful for training the data processor 302 are missed.

In some embodiments, the data annotator 306 and/or the data curator 310 may provide functions for the respective operator to provide additional annotations and/or comments relevant to the imaging case. For example, the operator may determine that is useful to provide additional information regarding unusual anatomy present in the image data, or information regarding pathology visible in the image data (e.g. disease labels and/or, or free text annotation), that may be useful for the subsequent retraining of a data processor.

In some embodiments, the data annotator 306 and/or the data curator 310 may provide functions for the respective operator to highlight regions of interest with the image data. For example, the data annotator 306 and/or the data curator 310 may provide functions for adding simple annotations such as circles, highlights, arrows, point comments.

In some embodiments, annotations provided by an operator using the data annotator 306 and/or the data curator 310 may be embedded with the image data; in other embodiments, the annotations may be saved separately, but linked to, the saved image data.

Although the embodiments described above are concerned mainly with determining whether to store the image data in a training data repository, in some embodiments, the data processing system performing the method described above with reference to Figure 2 may be implemented in an image processing system arranged to provide the one or metrics for use in an operational setting; for example, the image processing system may be arranged to provide the one or more metrics as information relating to the image data in a medical setting. In such embodiments, the data processing system may provide functionality to enable the operator of, for example, the data annotator 306 to attach additional data relevant to a patient who is the subject of the image acquisition and/or attach the image data to a radiological report or other medical notes.

The above-described embodiments may provide advantages over conventional methods of processing image data. For example, the above-described embodiments may provide a more efficient method of selecting image data for subsequent training of an image processing system. In particular, the efficiency of selection processes for selecting relevant data to improve existing learning-based image processing system may be improved; that is, as compared to existing methods of selecting or acquiring training data, training data may be acquired and/or selected with reduced input from human users. Furthermore, the frequency rate at which iterations of retraining processes can be performed may be reduced.

While the invention has been illustrated and described in detail with the help of a preferred embodiment, the invention is not limited to the disclosed examples. Other variations can be deducted by those skilled in the art without leaving the scope of protection of the claimed invention.

## Claims

1. A method of processing image data for training an image processing system, the method comprising:
receiving image data representing an image;
processing the image data to determine one or metrics relating to one or more characteristics of the image; and
performing a determination process to determine, based on the one or more metrics, whether to store the image data in a training data repository.

2. A method according to claim 1, comprising storing the image data in the training data repository on the basis that the determination process determines that the image data is to be stored.

3. A method according to claim 2, comprising:
retrieving image data from the training data repository;
associating ground truth data with the retrieved image data; and
training the image processing system on the basis of the retrieved image data and associated ground truth data.

4. A method according to any one of the preceding claims, comprising annotating the image data to provide an indication that the image data is suitable for training the image processing system.

5. A method according to any one of the preceding claims, wherein the determination process comprises comparing the one or more metrics with one or more threshold values.

6. A method according to any preceding claim, wherein the one or more metrics comprises one or more of: a determined size metric of an imaged feature; a determined size metric of an imaged feature; one or more determined intensity values associated with an imaged feature; and one or more texture metrics associated with an imaged feature.

7. A method according to any one of the preceding claims, comprising determining a confidence level associated with an output of an image processing algorithm and performing the determination process at least partly on the basis of the determined confidence level.

8. A method according to any one of the preceding claims, wherein the data processing system is arranged to receive an indication of a category of image data which is desired for training the image processing system, and the data processing system is arranged to perform the determination process at least partly on the basis of the received indication.

9. A data processing system for training an image processing system, the data processing system comprising a processor arranged to:
receive image data representing an image;
process the image data to determine one or metrics relating to one or more characteristics of the image; and
perform a determination process to determine, based on the one or more metrics, whether to store the image data in a training data repository.

10. A data processing system according to claim 9, arranged to store the image data in the training data repository at least partly on the basis of the determination that the image data represents an imaging case suitable for training of the image processing system.

11. A data processing system according to claim 10, comprising a first user interface, the first user interface being arranged to receive user input representing an indication of whether the determination that the image data represents an imaging case suitable for training of the image processing system is correct, wherein the data processing system is arranged to store the image data in the training data repository on the basis of the received user input.

12. A data processing system according to claim 11, wherein the first user interface comprises a touch-screen display, and wherein the processor is arranged to distinguish between a first touch-screen user input confirming that the image data represents an imaging case suitable for training the image processing system and a second touch-screen user input indicating that the image data does not represent an imaging case suitable for training the image processing system.

13. A data processing system according to claim 12, wherein the first and second touch-screen user inputs comprise swipe gestures, wherein the first touch-screen user input comprises a swipe gesture in a first direction and the second touch-screen user input comprises a swipe gesture in a second direction, the second direction being substantially opposite to the first direction.

14. A data processing system according to claim 10, comprising a second user interface, the second user interface being arranged to receive user input to associate ground truth data with the stored mage data wherein the data processing system is arranged to retrieve image data from the training data repository and to train the image processing system on the basis of the retrieved image data and associated ground truth data.

15. A computer program product comprising a computer program, the computer program being loadable into a memory unit of a data processing system, including program code sections to make the data processing system execute the method of any one of claims 1 to 8 when the computer program is executed in said data processing system.
